# EUROPÄISCHE PATENTANMELDUNG

(11) **EP 1 148 474 A2**
(43) Veröffentlichungstag der Anmeldung: **24.10.2001**
(21) Anmeldenummer: 01107229.5
(22) Anmeldetag: 23.03.2001
(51) Int. Cl.: G11B 5/62

(54) **Magnetisches Aufzeichnungsmedium**

(30) Priorität: 07.04.2000 DE 10017490
(71) Anmelder: EMTEC Magnetics GmbH, 67059 Ludwigshafen (DE)
(72) Erfinder: Jakusch, Helmut, Dr., 67227 Frankenthal (DE); Kohl, Albert, 67229 Laumersheim (DE); Heilmann, Peter, Dr., 67098 Bad Dürkheim (DE); Veitch, Ronald John, Dr., 67133 Maxdorf (DE); Kress, Ria, Dr., 67063 Ludwigshafen (DE); Müller, Stefan, Dr., 77731 Willstätt (DE); Sandrock, Johannes, Dr., 77694 Kehl (DE); Heene, Hartmut, 06804 Muldenstein (DE)

(57) **Zusammenfassung**

Die Erfindung betrifft ein mehrlagiges magnetisches Aufzeichnungsmedium, welches sich für hohe Aufzeichnungsdichten und die Aufnahme digitaler Daten eignet, sehr gute elektromagnetische Aufzeichnungseigenschaften sowie eine gute Oberflächenglätte zeigt und in der unteren Schicht eine hohe Gleitmittelmenge aufnehmen kann, und welches über wenigstens eine obere magnetische Aufzeichnungsschicht von weniger als 0,5 µm Dicke und über wenigstens eine untere Schicht verfügt, die ein weichmagnetisches Pigment enthält.

## Beschreibung

Die Erfindung betrifft ein magnetisches Aufzeichnungsmedium, insbesondere ein mehrlagiges magnetisches Aufzeichnungsmedium mit dünner oberer Magnetaufzeichnungsschicht, welches über gute elektromagnetische Aufzeichnungseigenschaften, eine glatte Oberfläche sowie eine verbesserte Gleitmittelaufnahme in der Unterschicht verfügt, sowie ein Verfahren zu dessen Herstellung.

Magnetische Aufzeichnungsmedien wie zum Beispiel Magnetbänder, Floppy disks oder Magnetkarten sind seit langem zur Aufzeichnung von analogen oder digitalen Audio- und Videosignalen oder zur Datenaufzeichnung bekannt.

Seit einigen Jahren besteht ein steigender Bedarf an Medien, die für immer höhere Aufzeichnungsdichten geeignet sind, das heisst, große Informationsmengen bei möglichst geringem Platzbedarf speichern können. Voraussetzung dafür sind immer geringere Schichtdicken der Aufzeichnungsschicht und Magnetpigmente mit immer kleineren Dimensionen und höheren Koerzitivkräften.

Dabei haben sich seit einiger Zeit bindemittelhaltige Doppelschichtmagnetmedien durchgesetzt, bei denen die durch die Schichtdickenreduktion der oberen Aufzeichnungsschicht auftretenden Herstellungsschwierigkeiten und mechanischen Stabilitätsprobleme durch eine relativ dicke untere Schicht ausgeglichen werden können, ohne auf eine hohe Aufzeichnungsdichte verzichten zu müssen. Sie weisen gegenüber den ebenfalls bekannten magnetischen Aufzeichnungsträgern vom ME-Typ (metal evaporated), die sich sehr gut für hohe Aufzeichnungsdichten eignen, eine höhere Haltbarkeit und eine bessere Produktivität bei der Herstellung auf.

Zur Informationsspeicherung besitzen sie eine sehr glatte, meist unter 0,5 µm dünne magnetische Oberschicht mit hochkoerzitiven Magnetpigmenten, vorzugsweise Metallpigmenten oder Pigmenten aus Metalllegierungen. Zwischen dem meist nichtmagnetischen Träger und der magnetischen Aufzeichnungsschicht befindet sich eine dickere, ebenfalls pigmentierte, bindemittelhaltige Unterschicht. Sie ist zum einem für den Herstellungsprozess solcher Doppelschichten besonders dann unumgänglich, wenn diese zur Einstellung einer sehr dünnen magnetischen Aufzeichnungsschichtdicke in Nass-Nass-Auftragung aufgebracht werden müssen. Zum anderen beeinflusst sie aber auch viele andere Eigenschaften, insbesondere die Bandglätte und die Mechanik solcher Magnetmedien.

Als Unterschichten werden hierbei Schichten eingesetzt, die sowohl magnetische als auch nichtmagnetische anorganische Pigmente enthalten, wie auch Schichten, welche neben Bindemitteln und üblichen Zuschlagstoffen nur nichtmagnetische Pigmente enthalten. In Veröffentlichungen und Praxisbeispielen wurde inzwischen gezeigt, dass magnetische Aufzeichnungsmedien mit einer solchen magnetischen Doppelschicht oder solche mit einer nichtmagnetischen Schicht zwischen Träger und Aufzeichnungsschicht die Speicherfähigkeit von entsprechenden magnetischen partikulären Monoschichtbändern mit ferromagnetischem Metallpulver in der Aufzeichnungsschicht deutlich übertreffen.

Es ist bekannt, dass bei magnetischen Aufzeichnungsmedien mit Doppelschicht die magnetische Speicherfähigkeit, d.h. die Aufzeichnungsdichte, oder auch der Signalpegel in erster Linie von den Eigenschaften der Oberschicht abhängt. Einflussparameter sind dabei unter anderem deren magnetische Eigenschaften, deren Oberflächenglätte, der eingesetzte Pigmenttyp sowie die Dicke der Oberschicht.

Daneben hat sich aber auch gezeigt, dass die nicht mit dem Magnetkopf in Kontakt kommende Unterschicht ebenso einen großen Einfluss auf die Eigenschaften des Gesamtmediums ausübt.

So wird es zum Beispiel erst durch speziell eingestellte rheologische Eigenschaften der Unterschichtdispersion in Relation zur Oberschichtdispersion möglich, bei Nass-Nass-Beschichtung überhaupt die gewünschte niedrige Schichtstärke der Oberschicht zu erreichen. Wenn die Unterschicht außerdem über eine exzellente Dispersionsqualität verfügt, kann sie Rauhigkeiten der Trägerfolie überdecken und dadurch eine gute Grundlage für eine glatte Oberschicht bilden. Zum anderen unterstützt sie mit ihrer hohen Porigkeit und angepassten Härteeinstellung wesentlich den Glättungsvorgang der Oberfläche beim Kalandrieren des Mediums.

Weitere wichtige Funktionen der Unterschicht sind zum Beispiel die Einstellung der elektrischen und mechanischen Eigenschaften des Bandes wie Leitfähigkeit, Kratzfestigkeit, Steifheit (E-Modul) und Lauffähigkeit (Reibungswerte). Für das Aufrechterhalten niedriger Bandreibungswerte über lange Betriebszeiträume muss die Unterschicht in der Lage sein, einen genügend hohen Gleitmittelvorrat zu speichern, der später durch Diffusion sukzessive an die Bandoberfläche gelangt.

Neben der Entwicklung von hochkoerzitiven Magnetpigmenten und Aufzeichnungsschichten mit erwünschten Eigenschaften war es deshalb seit längerer Zeit das Ziel vieler Entwicklungsanstrengungen, auch geeignete beziehungsweise verbesserte Unterschichten zur Verfügung zu stellen, um so die Aufzeichnungseigenschaften von magnetischen, partikulären Doppelschichtaufzeichnungsmedien weiter zu steigern. Dadurch soll auch deren Attraktivität gegenüber den bereits genannten ME-Medien gesteigert werden.

Dabei hat es sich als vorteilhaft herausgestellt, bestimmte Parameter zu variieren, um dadurch eine Verbesserung der Unterschichten zu erzielen. Dazu gehören zum Beispiel die Auswahl besonders geeigneter Unterschichtpigmente oder Pigmentzusammensetzungen (TiO₂, Ruße, Metalloxide, Stützpigmente), die Optimierung von deren Form und Größe (Nadeln, Spindeln, Feinteiligkeit, Homogenität), sowie die Verbesserung ihrer Dispergierbarkeit (Oberflächenausrüstung, sinterungsarme Herstellverfahren). Neben unmagnetischen Pigmenten wurden auch magnetische Pigmente, meist in Abmischung mit mehr oder weniger großen Mengen nichtmagnetischer Pigmente, in der Unterschicht eingesetzt, wodurch in vielen Fällen auch noch erwünschte Zusatzeigenschaften erhalten werden konnten.

So wird in der DE-A- 198 38 799 ein doppelschichtiges magnetisches Aufzeichnungsmedium beschrieben, welches in der unteren Schicht, die eine geringere Koerzitivkraft aufweist als die Oberschicht, ein magnetisches Pigment enthält, wodurch besonders gute Überschreibbarkeiten solcher Doppelschichten erzielt werden konnten.

In der EP-A-0 818 040 wird ein bandförmiger magnetischer Aufzeichnungsträger mit mehreren Schichten offenbart, der durch die Verwendung von schwach magnetischen, nadelförmigen Pigmenten in der unteren Schicht unter anderem hervorragende E-Moduli von Doppelschichtbändern erzielt.

Solche schwach magnetischen Pigmente in der unteren Schicht können, wie in der DE-A-197 47 068 beschrieben wurde, auch zu einer besonders guten Entrichtbarkeit von plattenförmigen Doppelschichtmedien führen.

Es sind auch bereits magnetische Aufzeichnungsmedien mit mehreren Schichten bekannt geworden, bei denen in der Unterschicht sowohl nichtmagnetische Pigmente allein, in Abmischung mit magnetischen Pigmenten oder in Abmischung mit weichmagnetischen Pigmenten eingesetzt wurden. Solche Medien sind zum Beispiel in der EP-A-0 592 922 und in der US-A-5 458 948 beschrieben worden.

Dabei weisen die Medien trotz unterschiedlicher Zusammensetzung der unteren Schichten keine nennenswerten Unterschiede in ihren elektromagnetischen und sonstigen Eigenschaften auf.

Die US-A-5 792 570 bezieht sich unter anderem auf ein mehrlagiges Aufzeichnungsmedium, bei welchem durch die Verwendung von weichmagnetischen Pigmenten in der magnetischen Aufzeichnungsschicht und gegebenenfalls auch in einer unteren Schicht die Glätte der Magnetschicht sowie das C/N-Verhältnis im Radiofrequenzbereich verbessert werden sollen. Dabei zeigen jedoch nichtmagnetische Unterschichten und Unterschichten mit weichmagnetischen Pigmenten keine Unterschiede bei den gewünschten Eigenschaften.

In der US-A-5 705 268 sind mehrlagige magnetische Aufzeichnungsmedien beschrieben worden, die eine magnetische Aufzeichnungsschicht mit ferromagnetischen Metallpulvern oder hexagonalen Ferriten aufweisen und deren Unterschicht ein weichmagnetisches Pigment mit enger Teilchengrössenverteilung enthält. Diese Aufzeichnungsmedien sollen gegenüber Medien mit nichtmagnetischen Unterschichten glattere Magnetschichtoberflächen, eine bessere Überschreibbarkeit sowie einen besseren Pegel im Radiofrequenzbereich aufweisen.

Die in der Unterschicht eingesetzten weichmagnetischen Pigmente sind dabei entweder Ferrite vom Spinell-Typ oder weichmagnetische Metalllegierungspulver, welche in der Regel nur über aufwendige Verfahren und/oder durch Anwendung höherer Temperaturen herstellbar sind.

Jedoch reicht bei diesen Medien die Porigkeit der unteren Schicht in der Regel nicht dazu aus, größere Mengen an Gleitmitteln aufzunehmen, was sich durch höhere Bandreibungswerte nach längerer Betriebsdauer bemerkbar macht. Auch besteht weiterhin ein Bedarf an magnetischen Aufzeichnungsmedien, die über eine noch bessere Oberflächenglätte und über verbesserte Pegelwerte bei kurzen Aufzeichnungswellenlängen verfügen.

Die Aufgabe der Erfindung bestand daher darin, ein mehrlagiges magnetisches Aufzeichnungsmedium für hohe Aufzeichnungsdichten mit einem hochkoerzitiven Magnetpigment in der oberen Magnetschicht zur Verfügung zu stellen, welches in der unteren Schicht weichmagnetische Pigmente enthält und über ausgezeichnete elektromagnetische Aufzeichnungseigenschaften, insbesondere einen hohen HF-Pegel und eine verbesserte Oberflächenrauhigkeit verfügt und in der Lage ist, in der Unterschicht ausreichend hohe Mengen an Gleitmitteln zu speichern.

Eine weitere Aufgabe bestand darin, in der unteren Schicht weichmagnetische Pigmente einzusetzen, die sich durch eine hohe Feinteiligkeit auszeichnen und kostengünstiger herstellbar sind als gebräuchliche Unterschichtpigmente.

Ebenso bestand eine zusätzliche Aufgabe der Erfindung darin, ein Verfahren zur Herstellung eines solchen magnetischen Aufzeichnungsmediums zur Verfügung zu stellen.

Die erfindungsgemäße Aufgabe wird durch ein mehrlagiges magnetisches Aufzeichnungsmedium gelöst, welches auf einem nichtmagnetischen Träger wenigstens eine obere bindemittelhaltige magnetische Aufzeichnungsschicht mit einer Dicke von kleiner als 0,5 µm, die ein feinteiliges Magnetpigment mit einer Koerzitivkraft H_{c} von 100 - 250 kA/m enthält, sowie wenigstens eine untere bindemittelhaltige Schicht, die ein isotropes, weichmagnetisches Pigment, welches aus γ-Fe₂O₃, Fe₃O₄ oder einem Mischkristall aus diesen Komponenten ausgewählt ist, mit einer mittleren Kristallitgröße von kleiner als 10 nm enthält, aufweist.

Des weiteren wird die erfindungsgemäße Aufgabe durch ein Verfahren zur Herstellung eines mehrlagigen magnetischen Aufzeichnungsmediums gelöst, welches umfasst:
- Mischen, Kneten und Dispergieren eines isotropen weichmagnetischen Pigmentes, welches aus γ-Fe₂O₃, Fe₃O₄ oder einem Mischkristall aus diesen Komponenten ausgewählt ist und eine mittlere Kristallitgröße von kleiner als 10 nm aufweist, mit einem Bindemittel, einem Lösungsmittel und weiteren Zusatzstoffen und Auftragen der Dispersion auf einen nichtmagnetischen Träger, wobei eine untere Schicht entsteht;
- Mischen, Kneten und Dispergieren eines feinteiligen Magnetpigmentes mit einer Koerzitivkraft H_{c} von 100 - 250 kA/m mit einem Bindemittel, einem Lösungsmittel und weiteren Zusatzstoffen und Auftragen der Dispersion auf die untere Schicht, wobei eine obere magnetische Aufzeichnungsschicht entsteht;
- Orientieren der feuchten Schichten in einem Magnetfeld;
- Trocknen der feuchten Schichten, bis eine Schichtdicke der oberen Schicht von kleiner als 0,5 µm erreicht ist, und
- Nachfolgendes Kalandrieren und Trennen.

Weitere Einzelheiten der Erfindung sowie bevorzugte Ausgestaltungen lassen sich der nachfolgenden Beschreibung und den Beispielen entnehmen.

Das erfindungsgemäße magnetische Aufzeichnungsmedium soll nun näher erläutert werden.

### 1. Unterschicht:

Die Unterschicht des erfindungsgemäßen magnetischen Aufzeichnungsmediums enthält ein isotropes weichmagnetisches Pigment, welches aus γ-Fe₂O₃, Fe₃O₄ oder einem Mischkristall aus diesen Komponenten ausgewählt ist und eine mittlere Kristallitgröße, die durch Röntgendiffraktometrie bestimmt und wobei die (311)-Linie ausgewertet wird, von kleiner als 10 nm, bevorzugt kleiner als 6 nm, aufweist und im wesentlichen einkristallin vorliegt.

Die mittlere Kristallitgröße, die bei einkristallinen Teilchen die mittlere Teilchengröße bestimmt, ist mit Werten von kleiner als 10 nm, und bevorzugt kleiner als 6 nm, ausserordentlich gering, was zu Vorteilen bei der Herstellung und insbesondere bei den Eigenschaften der damit hergestellten magnetischen Aufzeichnungsträger führt. Dabei ist die Teilchengrößenverteilung des Pigmentes nicht limitiert, insbesondere eher breit, das heißt, die mittlere Kristallitgröße wird aus den Kristallitgrößen von feinen und gröberen Teilchen ermittelt.

Die weichmagnetischen Pigmente weisen eine kugelförmige oder amorphe Form auf. Insbesondere bevorzugt sind amorphe Partikel.

Solche feinteiligen Pigmente sind eine notwendige Voraussetzung für feinstdisperse Dispersionen für die untere Schicht, mit Hilfe derer eine sehr glatte untere Schicht erzeugt werden kann, wenn auf den Zusatz von weiteren Pigmenten mit beträchtlich größeren Teilchengrößen verzichtet wird. Eine derart feinteilige Unterschicht ist porenhaltig, weich und leicht verformbar, wodurch sich in der Kalandrierstufe eine hohe Schichtglätte der unteren Schicht erzeugen lässt. Außerdem sind nachteilige Erscheinungen wie Kettenbildung der weichmagnetischen Partikel im Magnetfeld und magnetische Agglomeration, die beim Einsatz von magnetischem Material mit größerer Kristallitgröße zu beobachten sind und dort zu nachteiligen Wirkungen bezüglich der Oberflächenglätte der Magnetschicht und des erzielbaren HF-Pegels führen, nicht feststellbar.

Diese feinteilige untere Schicht bildet eine gute Basis für eine darauf aufzubringende obere magnetische Aufzeichnungsschicht, wodurch deren Oberflächenglätte erhöht werden kann.

Das weichmagnetische Pigment in der Unterschicht des erfindungsgemäßen Aufzeichnungsmediums ist im Vergleich zu anderen gebräuchlichen Unterschichtpigmenten, insbesondere zu nadelförmigen unmagnetischen Eisenoxiden, kostengünstig herstellbar und erfordert im Gegensatz zu diesen bei der Herstellung keinen Hochtemperaturschritt, womit ein Sintern der Pigmente im Herstellprozess vermieden wird. Damit lässt sich auf einfache Weise die Dispergierbarkeit der Unterschichtpigmente erheblich verbessern, was wiederum zu glatten Schichten führt.

Das genannte weichmagnetische Pigment kann zur Verbesserung seines Dispergierverhaltens auch oberflächenbehandelt sein. Als vorteilhaftes Mittel zur Oberflächenbehandlung sind insbesondere Aluminiumverbindungen und/oder Siliziumverbindungen geeignet.

Durch die hohe Feinteiligkeit des Pigmentes wird dessen spezifische Oberfläche (SSA) erhöht. Diese anhand der BET-Methode bestimmte spezifische Oberfläche beträgt mehr als 100 m²/g und insbesondere mehr als 120 m²/g. Dies trägt zu einer größeren Porigkeit in der unteren Schicht bei. Über die Adsorption an der hohen Oberfläche der weichmagnetischen Pigmente und über das höhere Porenvolumen in der unteren Schicht kann bei gleicher Schichtdicke im Vergleich zu Partikeln mit größerer Teilchengröße in der unteren Schicht eine größere Menge an Gleitmitteln aufgenommen werden, welche während einer langen Benutzungsdauer des magnetischen Aufzeichnungsmediums sukzessive an die obere Schicht abgegeben werden kann und damit die Reibungswerte der Magnetschicht auch bei längerer Betriebsdauer des Mediums niedrig hält. Bezogen auf das Gesamtgewicht der Pigmente in der Unterschicht kann so die Aufnahme einer Gleitmittelmenge von mehr als 6 Gew.%, vorzugsweise mehr als 7 Gew.% erzielt werden.

Bezüglich der vorteilhaften Wirkung eines großen Gleitmittelreservoirs auf die Bandmechanik sei hier auf den Vortrag von H. Doshita anläßlich der TISD-Konferenz am 03.12.1997 in London verwiesen.

Das weichmagnetische Pigment in der unteren Schicht des erfindungsgemäßen Aufzeichnungsmediums weist einen pH-Wert von etwa 7 bis 10 auf. Dieser pH-Wert entspricht im wesentlichen dem pH-Wert der im Medium eingesetzten hochkoerzitiven Magnetpigmente für die obere Aufzeichnungsschicht, insbesondere der dort eingesetzten Metallpigmente. Daher lassen sich vorteilhafterweise dieselben oder sehr ähnliche Bindemittel- und Lösemittelsysteme sowohl für die obere Aufzeichnungsschicht als auch für die untere Schicht verwenden, was zu einer hohen Verträglichkeit beider Dispersionen führt und die Herstellung des Mediums vereinfacht.

Die Koerzitivkraft H_{c} des weichmagnetischen Pigmentes ist sehr gering, insbesondere kleiner als 0,7 kA/m, bevorzugt gleich oder kleiner als 0,3 kA/m. Diese geringe Koerzitivkraft des weichmagnetischen Pigmentes beeinträchtigt das Aufzeichnungsverhalten der oberen Magnetschicht nicht negativ. Die maximale spezifische Magnetisierung σₛ (gemessen bei 400 kA/m) der weichmagnetischen Pigmente beträgt 30 bis 65, bevorzugt 36 bis 52 emu/g.

### 1.1 Herstellung des Unterschichtpigments:

Die Herstellung des feinstkristallinen Fe₃O₄ oder γ-Fe₂O₃ Pigments beziehungsweise eines aus diesen Komponenten bestehenden Mischkristalls kann nach einem oder mehreren der in den Patentschriften DE 26 42 383, 30 27 012, 44 27 821 oder JP 57-175734 beschriebenen Verfahren erfolgen. Als Ausgangsmaterialien dienen Eisen-II-Salze, Eisen-III-Salze, alkalische Fällungsmittel und Oxidationsmittel. Als Eisen-II-Salze werden gewöhnlich FeCl₂ oder FeSO₄ verwendet. Als Eisen-III-Salze kommen FeCl₃, Fe₂(SO₄)₃ oder deren Gemische in Frage.

MgO, MgCO₃, CaO, CaSO₃, NaOH, KOH, NH₃, Na₂CO₃, K₂CO₃ oder andere basisch reagierende wasserlösliche oder schwerlösliche Verbindungen werden als Fällungsmittel eingesetzt.

Je nachdem, welches Fe-III/ Fe-II-Verhältnis vorliegt, ist ein Oxidationsmittel erforderlich, um das gesamte Fe-II zu Fe-III zu oxidieren. Gewöhnlich wird hier Luftsauerstoff verwendet, aber der Einsatz von O₂, O₃, Chlor, H₂O₂ oder Nitraten ist ebenfalls möglich. Die Herstellung des nanoskaligen Magnetits selbst wird folgendermaßen durchgeführt:
a) Ein Gemisch eines Fe-III-Salzes mit einem Fe-II-Salz wird in einem Reaktor mit guter Durchmischungseinrichtung vorgelegt. Die Fe-Konzentration liegt bei 30 - 70 g/l Fe. Das Gemisch enthält 50-57 mol% Fe-III.
b) Dieses Gemisch wird auf die Fällungstemperatur aufgeheizt, die zwischen 30 und 60°C liegt.
c) Mit einem alkalischen Fällungsmittel wird innerhalb von 10 - 60 Minuten ausgefällt. Die Menge des Fällungsmittels liegt zwischen 100 und 110% der Stöchiometrie. Die Konzentration beträgt 2 - 10 Äquivalente pro Liter Lösung.
d) Üblicherweise wird mit einem Oxidationsmittel, gewöhnlich Luftsauerstoff, noch kurze Zeit nachbehandelt, um das gesamte Fe-II zu oxidieren.
e) Wird die Herstellung von γ-Fe₂O₃ in Suspension gewünscht, so ist eine längere Oxidation erforderlich. Hier wird auch ein höherer Volumenstrom Luftsauerstoff eingestellt und die Suspension kann auf 50 - 90°C erwärmt werden.

Das erhaltene Produkt wird üblicherweise filtriert, gewaschen und sprühgetrocknet.

Die Unterschicht im erfindungsgemäßen Aufzeichnungsmedium kann neben dem genannten weichmagnetischen Pigment auch noch weitere Pigmente, vorzugsweise anorganische nichtmagnetische Pigmente enthalten.

Dabei handelt es sich in der Regel um Pigmente, die die elektrische Leitfähigkeit und/oder die mechanischen Eigenschaften der Schicht verbessern. Beispiele dafür sind Ruß, Graphit, Zinnoxid, Silberpulver, Silberoxid, Silbernitrat, Kupferpulver oder Metalloxide wie Zinkoxid, Bariumsulfat und Titandioxid.

Bevorzugt werden Ruß oder Graphit eingesetzt.

Als weitere Pigmente können jedoch auch feinteilige α-Fe₂O₃-Pigmente, α-FeOOH-Pigmente oder Chromoxide, bevorzugt Chromoxid/-hydroxid-Pigmente mit einer Kern-Hülle-Struktur, zugegeben werden.

Diese Pigmente können einzeln oder im Gemisch eingesetzt werden. Bevorzugt wird Ruß allein oder ein Gemisch aus Ruß und einem weiteren anorganischen Pigment eingesetzt.

Die mittlere Teilchengröße des weiteren anorganischen Pulvers beträgt im allgemeinen 5 bis 200 nm, seine spezifische Oberfläche liegt zwischen 30 und 200 m²/g. Es können sowohl nadelförmige nichtmagnetische Pigmente mit einer mittleren Längsachse von 5 bis 200 nm wie auch kugelförmige oder amorphe nichtmagnetische Pigmente mit einer mittleren Teilchengröße von 5 bis 180 nm eingesetzt werden.

Das weichmagnetische Pigment in der Unterschicht wird in einer Menge von 25 bis 85 Gew.%, bevorzugt 35 bis 78 Gew.%, bezogen auf das Gewicht der gesamten in der Unterschicht vorhandenen Pigmente, eingesetzt.

Die oben beschriebenen Pigmente werden in der unteren Schicht mit einem polymeren Bindemittel eingesetzt. Die Art des Bindemittels ist dabei nicht beschränkt, vielmehr kommen alle an sich bekannten und gebräuchlichen Bindemittel in Frage. Bevorzugt werden Polyurethane und /oder Vinylchloridcopolymere verwendet, die auch in Kombination mit weiteren polymeren Bindemitteln und/oder Dispergiermitteln eingesetzt werden können. In einer besonders bevorzugten Ausführungsform weisen diese polymeren Bindemittel polare Gruppen, zum Beispiel Sulfonatgruppen oder Phosphatgruppen, auf, wodurch die Dispergierbarkeit der in der Dispersion vorhandenen Pigmente positiv beeinflusst wird.

Als Dispergiermittel werden die üblichen Dispergiermittel wie Fettsäuren oder Metallsalze, aber auch polymere, bindemittelartige Komponenten mit einer erhöhten Anzahl von polaren Gruppen eingesetzt.

Darüber hinaus kann die untere Schicht noch weitere verschiedene allgemein gebräuchliche Zusätze enthalten, wie zum Beispiel Gleitmittel, Vernetzer oder Antistatikmittel.

Als Gleitmittel kommen hierbei alle allgemein gebräuchlichen Gleitmittel in Frage, insbesondere die häufig gebrauchten Fettsäuren oder Fettsäureester.

Als Vernetzer werden üblicherweise Polyisocyanate eingesetzt.

Antistatikmittel sind die aus dem Stand der Technik bekannten anionischen, kationischen oder natürlichen Netzmittel wie auch die oben bereits genannten Pulver zur Verbesserung der elektrischen Leitfähigkeit der Schicht.

Zur Herstellung der Dispersion für die untere Schicht werden die weichmagnetischen Pigmente mit den Bindemitteln, den weiteren anorganischen Pigmenten und allen anderen Zusätzen zusammen mit einem vorzugsweise organischen Lösungsmittel gemischt und dispergiert. Als organische Lösungsmittel können alle aus dem Stand der Technik bekannten gebräuchlichen Lösungsmittel eingesetzt werden, insbesondere Tetrahydrofuran, Methylethylketon, Cyclohexanon oder Dioxan, oder Gemische aus zwei oder mehreren davon.

### 2. Oberschicht

Das erfindungsgemäße magnetische Aufzeichnungsmedium umfasst eine obere dünne magnetische Aufzeichnungsschicht.

Das in dieser Schicht enthaltende ferromagnetische Pigment ist bevorzugt ein ferromagnetisches Metallpigment oder Metalllegierungspigment in hoher Konzentration. Diese Pigmente enthalten als Hauptbestandteil Fe, Ni und Co; ferner bedarfsweise Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Mn, Zn, Sr oder B, einzeln oder im Gemisch, und können an ihrer Oberfläche eine Schutzhülle gegen Oxidation und sonstige schädliche Einflüsse oder zur Verbesserung ihrer Dispergierbarkeit aufweisen.

Die Metall- oder Metalllegierungspulver sind bevorzugt nadel- oder spindelförmig und weisen eine spezifische BET-Oberfläche im Bereich von 40 - 90 m²/g auf, die mittlere Achsenlänge der Partikel beträgt höchstens 200 nm, insbesondere höchstens 120 nm, der Achsendurchmesser liegt im Bereich von 10 - 30 nm. Das Achsenverhältnis liegt im Bereich von 2 bis 20. Die Koerzitivkraft H_{c} dieser Magnetpigmente ist größer als 100 kA/m und gleich oder kleiner als 250 kA/m, bevorzugt 130 - 220 kA/m und noch bevorzugter 140 - 205 kA/m. Sie weisen eine hohe spezifische Sättigungsmagnetisierung σₛ im Bereich von 115 bis 170 emu/g auf.

Das ferromagnetische Pigment kann aber auch ein anderes, feinteiliges, hochkoerzitives Magnetpigment sein. Dafür kommen in erster Linie bekannte Magnetpigmente mit hexagonaler Ferritstruktur, insbesondere Bariumferrite oder Strontiumferrite in Betracht, die auch geringe Mengen von Fremdmetallen wie Ti, Co, Ni, Zn, V oder dergleichen enthalten können.

Diese Pigmente stellen bevorzugt feinteilige plättchenförmige Pigmente mit einer mittleren Teilchengröße von etwa 20 bis 120 nm und einem Achsenverhältnis von 2 bis 10 dar. Ihre Koerzitivkraft H_{c} liegt im Bereich von etwa 100 bis 190 kA/m. Sie weisen eine spezifische Sättigungsmagnetisierung von 30 - 70 emu/g auf.

Des weiteren können als Magnetpigmente der Oberschicht auch nadel- oder spindelförmiges sowie isotropes, Co-modifiziertes γ-Fe₂O₃, Co-modifiziertes Fe₃O₄ oder deren Mischstufen mit einer H_{c} von 100 - 180 kA/m und einer Sättigungsmagnetisierung von 50 - 100 emu/g eingesetzt werden.

Diese Magnetpigmente sind an sich bekannt und können nach den üblichen bekannten Verfahren hergestellt werden.

Die magnetische Aufzeichnungsschicht kann neben dem genannten hochkoerzitiven Magnetpigment auch unmagnetische Pigmente, die zum Beispiel als Schleifmittel oder Stützpigmente dienen, wie α-Fe₂O₃, Cr₂O₃, TiO₂, SiO₂, Al₂O₃, BaSO₄, Bornitrid, SnO₂, CaCO₃, ZrO₂, TiC, SiC, Sb₂O₃, ZnO, CeO₂ oder dergleichen enthalten. Zur Verbesserung ihrer Dispergierbarkeit können diese Pigmente einer Oberflächenbehandlung unterzogen werden.

Des weiteren enthält die obere Magnetschicht gegebenenfalls auch die bereits für die Unterschicht angegebenen α-FeOOH-Pigmente oder Chromoxid/- hydroxid-Pigmente mit Kern-Hülle-Struktur.

Diese Pigmente werden in der oberen magnetischen Aufzeichnungsschicht mit einem polymeren Bindemittel eingesetzt. Als Bindemittel kommen dabei alle bereits für die untere Schicht beschriebenen Bindemittel in Frage.

Das Gewichtsverhältnis von Magnetpigment zu Bindemittel beziehungsweise der Anteil des Magnetpigmentes an der Gesamtpigmentmenge in der Oberschicht beträgt zwischen 3:1 und 7:1 beziehungsweise 80 bis 93 %.

Weitere Zusätze können bekannte und gebräuchliche Dispergiermittel, Mittel zur Verbesserung der elektrischen Leitfähigkeit der Schicht, Gleitmittel, Vernetzer und Antistatikmittel sein. Die Art der dabei verwendeten Verbindungen entspricht der Art der für diese Zwecke für die untere Schicht eingesetzten Verbindungen.

Zur Herstellung der Dispersion für die obere magnetische Aufzeichnungsschicht werden die magnetischen Pigmente mit den Bindemitteln, den weiteren anorganischen unmagnetischen Pigmenten, vorzugsweise dem Ruß und den anderen Zusätzen zusammen mit einem vorzugsweise organischen Lösungsmittel gemischt und dispergiert. Als organische Lösungsmittel finden die bereits für die untere Schicht erwähnten Lösungsmittel Verwendung.

### 3. Träger

Als unmagnetischer Träger für das erfindungsgemäße magnetische Aufzeichnungsmedium kommen alle herkömmlichen gebräuchlichen Trägermaterialien ohne Beschränkung in Betracht. Dabei sind insbesondere die bekannten flexiblen Schichtträger wie Filme aus Polyestern, zum Beispiel Polyethylenterephthalat oder Polyethylennaphthalat, sowie Polyolefinen, Cellulosetriacetat, Polycarbonaten, Polyamiden, Polyimiden, Polyamidoimiden, Polysulfonen, Aramiden oder aromatischen Polyamiden besonders gut geeignet. Es können jedoch auch starre Träger aus Metallen, Glas oder keramischen Materialien eingesetzt werden.

### 4. Herstellung des erfindungsgemässen Aufzeichnungsmediums

Das Verfahren zur Herstellung der Dispersionen für die obere und untere Schicht ist an sich bekannt und umfasst mindestens eine Knetstufe, eine Dispergierstufe und gegebenenfalls eine Mischstufe, die vor oder nach den vorab genannten Stufen vorgesehen sein kann. Die jeweiligen Stufen können jeweils aus zwei oder mehr Arbeitsschritten zusammengesetzt sein.

Bei der Herstellung der Zusammensetzung können alle Ausgangsmaterialien, nämlich die vorab aufgeführten Bestandteile der jeweiligen Dispersionen für die obere und untere Schicht gleich zu Beginn des Verfahrens oder später während des Ablaufs des Verfahrens dem Reaktoraggregat zugesetzt werden. Der Vernetzer sowie gegebenenfalls ein Vernetzungskatalysator wird vorzugsweise nach Abschluss der Dispersionsherstellung zugegeben.

Nach Feinfiltration durch engmaschige Filter mit einer Weite von höchstens 5 µm werden die Dispersionen mittels einer konventionellen Beschichtungsvorrichtung mit Geschwindigkeiten im üblichen Bereich auf den nichtmagnetischen Träger aufgetragen, im Magnetfeld gegebenenfalls in eine Vorzugsrichtung ausgerichtet, getrocknet und nachfolgend einer Kalanderbehandlung und gegebenenfalls einer weiteren Oberflächenglättungsbehandlung unterzogen. Die Vorzugsrichtung für die Magnetfeldbehandlung kann dabei längs der Auftragsrichtung der Dispersion oder bis zu einem Winkel von 35 ° dazu gekippt sein. Es kann jedoch auch eine Magnetfeldbehandlung mit dem Ziel der Erzeugung einer zwei- oder dreidimensional isotropen Ausrichtung der Magnetteilchen erfolgen.

Zur Herstellung der erfindungsgemässen magnetischen Aufzeichnungsträger kann die Beschichtung mittels Rakelgiesser, Messergiesser, Abstreifgiesser, Extrudergiesser, Reverse-Roll-Coater oder Kombinationen daraus erfolgen. Die Schichten können simultan oder sukzessive im Naß/Naß-Verfahren oder im Naß/Trocken-Verfahren aufgetragen werden. Besonders bevorzugt ist ein Naß/Naß-Auftragsverfahren, da hiermit das Aufbringen dünner Schichtdicken für die obere Schicht erleichtert wird.

Bevorzugt wird zur Herstellung des erfindungsgemäßen magnetischen Aufzeichnungsträgers ein Messergiesser mit mindestens einer, vorzugsweise zwei oder mehr Austrittsöffnungen eingesetzt, welcher aus der DE-A- 195 04 930 bekannt ist.

Ebenfalls geeignet ist ein Extrudergiesser mit mindestens einer, vorzugsweise zwei oder mehr Austrittsöffnungen, wobei den Öffnungen gegenüberliegend auf der anderen Seite des flexiblen Schichtträgers die Kante oder der Luftspalt eines Magneten gegenübersteht und wobei dessen Feldlinien im wesentlichen parallel zur Laufrichtung des Schichtträgers verlaufen. Solche Anordnungen sind aus der EP-A-0 654 165 oder der FR 2 734 500 bekannt.

Nach der dem Beschichten folgenden Trocknung und Kalandrierung wird das so erhaltene magnetische Aufzeichnungsmedium in die gewünschte Gebrauchsform geschnitten oder gestanzt und den üblichen elektromagnetischen sowie mechanischen Prüfungen unterzogen.

Das erfindungsgemässe magnetische Aufzeichnungsmedium besteht bevorzugt aus einem nichtmagnetischen Träger, einer unteren magnetischen Schicht mit der oben angegebenen Zusammensetzung und einer oberen magnetischen Aufzeichnungsschicht mit der oben angegebenen Zusammensetzung. Dabei beträgt die Schichtdicke der unteren magnetischen Schicht 0,5 bis 3 µm, bevorzugt 1,0 bis 2,0 µm. Die Schichtdicke der oberen magnetischen Aufzeichnungsschicht ist kleiner als 0,5 µm, insbesondere kleiner als 0,3 µm und bevorzugt 0,15 bis 0,25 µm.

Beide Schichten können aus einzelnen Schichten oder aus einem Schichtverbund aus jeweils mehreren Schichten bestehen, solange die Gesamtdicke der oberen und unteren Schichten im oben angegebenen Bereich bleibt.

Es ist möglich, dass die Rückseite des nichtmagnetischen Trägers mit derselben Schichtzusammensetzung beschichtet wird wie vorab beschrieben. Es ist ebenso möglich, auf der Rückseite des nichtmagnetischen Trägers eine aus dem Stand der Technik bekannte Rückschicht mit einer allgemein gebräuchlichen Zusammensetzung aufzutragen. Zwischen dem nichtmagnetischen Träger und der unteren Schicht, die das weichmagnetische Pigment enthält, kann auch eine so genannte Haftschicht aufgetragen werden. Diese Schichten können jeweils separat, oder simultan beziehungsweise sukzessive mit den vorab beschriebenen oberen und unteren Schichten aufgetragen werden.

Das magnetische Aufzeichnungsmedium gemäss der vorliegenden Erfindung weist eine verbesserte Oberflächenglätte der magnetischen Schicht, sehr gute allgemeine elektromagnetische Eigenschaften und einen gegenüber Medien mit herkömmlichen weichmagnetischen Pigmenten in der unteren Schicht verbessertem Pegel im HF-Bereich auf und kann in der unteren Schicht eine genügend große Menge an Gleitmitteln speichern, um über stabile Laufeigenschaften insbesondere hinsichtlich der Reibungswerte bei längerer Laufzeit zu verfügen. Damit ist dieses Medium hervorragend für die Aufzeichnung von digitalen Daten mit hoher Speicherdichte geeignet.

### Erfindungsbeispiele

### Herstellung des magnetischen Aufzeichnungsmediums

### Oberschicht

Eine Mischung aus 100 Gew.-Teilen eines marktüblichen ferromagnetischen Metallpigments mit den Hauptbestandteilen Fe und Co (Hc 183 kA/m, σₛ 140 emu/g, SSA 55 m²/g, mittlere Partikellänge 85 nm), 13 Gew.-Teilen α-Al₂O₃ (Durchmesser Primärpartikel 180 nm), 10 Gew.-Teilen eines PVC-Copolymers (Mn 11000, Tg 68°C, Sulfonatgruppenhaltig), 3,5 Gew.-Teilen eines dispergieraktiven PES-PU Copolymers (Fa. Morton, Mn 20000, Sulfonatgruppenhaltig), 2 Gew.-Teilen Stearinsäure, 1 Gew.-Teil Myristinsäure, je 15 Gew.-Teilen Tetrahydrofuran und Dioxan wurden in einem Batch-Kneter (IKA Hochleistungskneter Typ HKD 10, Firma IKA Maschinenbau, Staufen) 2 Stunden geknetet. Die Knetmasse wurde anschließend portionsweise in einem Dissolver unter starkem Rühren mit einem Gemisch aus je 155 Gew.-Teilen Tetrahydrofuran und Dioxan versetzt und dann 10 Stunden mit einer Rührwerksmühle dispergiert. Zu der Dispersion wurden anschließend unter starkem Rühren 1 Gew.-Teil Butylstearat, 4 Gew.-Teile einer 50%igen Lösung des Umsetzungsprodukts von 3 Mol Toluylendiisocyanat mit 1 Mol Trimethylolpropan in Tetrahydrofuran, sowie portionsweise ein Gemisch aus je 44 Gew.-Teilen Tetrahydrofuran und Dioxan gegeben. Nach Filtration durch einen Filter der Porenweite 2 µm wurde eine homogene, feinteilige, absetzstabile und flokkulatfreie beschichtungsfertige Dispersion für die Oberschicht erhalten.

### Unterschicht

Eine Mischung aus 100 Gew.-Teilen eines in Tabelle 1 genannten weichmagnetischen Unterschichtpigmentes, 32 Gew.-Teilen Ruß (durchschnittliche Primärteilchengröße 25 nm, SSA 115 m²/g), 13 Gew.-Teilen eines PVC-Copolymers (Mn 11000, Tg 68°C, Sulfonatgruppen-haltig), 7,5 Gew.-Teilen eines handelsüblichen dispergieraktiven Polyurethans mit polaren Ankergruppen (Fa. Morton, Tg 70°C), 7,5 Gew.-Teilen eines zweiten handelsüblichen Polyurethans mit polaren Ankergruppen (Tg 35°C, Firma Morton), 2 Gew.-Teilen Stearinsäure, je 27 Gew.-Teilen Tetrahydrofuran und Dioxan wurden in einem Batch-Kneter 3 Stunden geknetet. Die Knetmasse wurde anschließend in einem Dissolver unter starkem Rühren portionsweise mit einem Gemisch aus je 234 Gew.-Teilen Tetrahydrofuran und Dioxan versetzt und dann 15 Stunden in einer Rührwerksmühle dispergiert. Zu der Dispersion wurden anschließend unter starkem Rühren 6,3 Gew.-Teile einer 50%igen Lösung des Umsetzungsprodukts von 3 Mol Toluylendiisocyanat mit 1 Mol Trimethylolpropan in Tetrahydrofuran zugegeben. Nach Filtration durch einen Filter der Porenweite 2µm wurde eine homogene, feinteilige, absetzstabile und flokkulatfreie beschichtungsfertige Dispersion erhalten.

### Rückschicht

Eine Mischung aus 25,5 Gew.-Teilen eines Gemisches aus Tetrahydrofuran und Dioxan im Verhältnis 1 : 1 wurde mit 1,2 Gew.-Teilen eines blockcopolymeren Polyester-Polyurethan Bindemittels, 0,44 Gew.-Teilen eines Polyvinylformals, 0,6 Gew.-Teilen eines Polyolefins (Mw 3000), 0,06 Gew.-Teilen einer isomeren C18-Carbonsäure, 0,2 Gew.-Teilen Dispergierhilfsmittel, 3,4 Gew.-Teilen eines leitfähigen Rußes, 0,87 Gew.-Teilen einer Fällungskieselsäure sowie mit 0,29 Gew.-Teilen eines Stützpigmentes vermischt. Die polymeren Bindemittelbestandteile wurden zuerst in einem Teil des Lösemittelgemisches gelöst. Anschließend wurde 10-15 Stunden lang in einer Rührwerkskugelmühle dispergiert. In einer zweiten Phase wurden weitere 24,4 Gew.-Teile des Lösungsmittelgemisches, 1,4 Gew.-Teile des blockcopolymeren Polyester-Polyurethan-Bindemittels, 0,73 Gew.-Teile des Polyolefins (Mw 3000) sowie 0,04 Gew.-Teile Dispergierhilfsmittel und Zusatzstoffe zudosiert. Die polymeren Bestandteile wurden ebenfalls zuvor in einem Teil des Lösemittels in Lösung gebracht. Die Mischung wurde sodann zur intensiven Vermischung in einer Rührwerkskugelmühle oder einer Zahnkolloidmühle dispergiert. Die so erhaltene Dispersion wurde in einem letzten Schritt, unmittelbar vor der Beschichtung, mit weiteren 13,4 Gew.-Teilen des Lösemittelgemisches sowie mit 1,8 Gew.-Teilen eines Vernetzers versetzt.

### Aufzeichnungsträger

Die Dispersion für die Rückschicht wurde auf die Rückseite einer Polyethylenterephthalat-Folie mit einem Messergiesser aufgebracht, so dass nach dem Trocknen bei 60° - 80° C eine Schichtdicke von 0,5 - 1,5 µm erhalten wurde.

Auf die Vorderseite der rückbeschichteten Polyethylenterephthalat-Folie wurden die Ober- und Unterschichtdispersionen mit einem Doppelmessergiesser naß in naß aufgetragen. Dabei war die Dicke der oberen Metallpigment enthaltenden Magnetschicht in jedem Beispiel möglichst gleich, nämlich 0,25 ±0,03 µm, um die Einflüsse der unteren magnetischen Schicht besser aufzeigen zu können. Im Schichtdickenbereich < 0,5 µm für die obere Schicht wurde in hier nicht aufgezeigten Versuchen nachgewiesen, dass die Schichtdicke der oberen Schicht die Einflüsse der magnetischen Unterschicht nur unwesentlich beeinflusst. Wird die Schichtdicke der oberen Schicht jedoch deutlich höher als 0,5 µm, kann eine Erhöhung des HF-Pegels nicht mehr festgestellt werden. Die Dicke der unteren Schicht ist in der Tabelle 1 jeweils angegeben. Vor dem Trocknen wurde die beschichtete Folie zur Ausrichtung der ferromagnetischen Pigmente durch eine magnetische Richtstrecke bestehend aus einer Spule mit einer Magnetfeldstärke von 200 kA/m hindurchgeführt. Nach dem Trocknen bei 80 °C wurden die Folienbahn mit einem Stahl-Stahl-Kalander mit 6 Spalten bei 80 °C und einem Liniendruck von 2000 N/cm kalandriert und anschließend in verschieden breite Videobänder geschnitten.

Die Messung der magnetischen Eigenschaften der Bänder und der Unterschichten erfolgte mittels eines Schwingmagnetometers mit maximaler Feldstärke von 400 kA/m.

Zur Bestimmung des HF-Pegels wurden mit einem Hi8 Recorder 7,7 MHz Signale (entsprechend einer Wellenlänge von 0,49 µm) auf das Band aufgezeichnet. Die Pegelhöhe des Wiedergabesignals gleicher Frequenz wurde oszillographisch bestimmt. Je höher der HF-Pegel ist, desto besser ist das Band.

Die Messung der Kristallitgröße der Pulver wurde nach dem bekannten Standardverfahren mittels eines Röntgendiffraktometers D5000 der Fa. Siemens durchgeführt (Röntgenröhre Kupfer, Detektorblende 0,1 mm, Divergenz und Streustrahlblende variabel, Meßgeschwindigkeit 0,5°/Minute). Es wurde die (311)-Linie ausgewertet.

Die Rauhigkeit der Bandoberfläche wurde mit einem optischen Interferenzverfahren gemessen. Dazu wurde das kommerzielle Gerät TOPO 3D der Firma Wyko verwendet und der Rₐ-Wert bestimmt.

Zur Herausarbeitung des entscheidenden Einflusses der unteren Schicht wurde in allen Beispielen in der oberen Schicht das bereits oben beschriebene Metallpigment eingesetzt, welches ein typisches in DVC- Bändern verwendetes Pigment darstellt.

Die Beispiele 1 und 2 zeigen erfindungsgemässe bandförmige Aufzeichnungsmedien mit zwei verschiedenen weichmagnetischen Unterschichtpigmenten. Bei Beispiel 3 wurde in der Unterschicht die doppelte Menge Gleitmittel (Stearinsäure) zugesetzt. Es wurde gefunden, daß dadurch die Reibung bei Normalklima um 10% verbessert wurde, daß aber insbesondere auch der Reibungswert nach 3 Wochen Dauerlauf im Feucht-Warmklima (40°C, 85% r. F.) um ca. 25 % heruntergesetzt wurde.

Beispiel 4 zeigt ein erfindungsgemäßes Beispiel, bei dem die Hälfte des weichmagnetischen Unterschichtpigments durch ein in unmagnetischen Unterschichten sonst übliches nadelförmiges α-Fe₂O₃ (Teilchenlänge 120 nm, Teilchendicke 20 nm) ersetzt wurde.

Die Messwerte in Tabelle 1 bezüglich dieses Beispiels zeigen, dass auch bei Zugabe des α-Fe₂O₃ zum weichmagnetischen Unterschichtpigment im Gewichtsverhältnis von 1:1 die positiven Wirkungen der Erfindung auf die Rauhigkeit der Oberfläche und den HF-Pegel vorhanden sind.

**Tabelle 1**

| Beispiel | Unterschicht-Pigment | | | Unterschicht | | | | Band | |
|---|---|---|---|---|---|---|---|---|---|
| Nr. | Typ | d (kr) | Fe-II | d | H_{c} | Φm | Mr/Mm | Ra | HF |
| | | nm | Gew.-% | µm | kA/m | nWb/m | | nm | dB |
| 1 | a | 5,0 | 9 | 1,2 | 0,2 | 102 | 0,02 | 4,2 | 1,3 |
| 2 | b | 4,5 | 2 | 1,1 | 0,1 | 89 | 0,01 | 5,0 | 0,9 |
| 3 | b | 4,5 | 2 | 1,3 | 0,1 | 92 | 0,01 | 4,7 | 1,1 |
| 4 | c+Fe₂O₃ | 5,5 | 3 | 1,3 | 0,3 | 47 | 0,01 | 4,8 | 1,0 |

### Vergleichsbeispiele (Tabelle 2)

Die Vergleichsbeispiele, als Beispiele 5 bis 9 bezeichnet, wurden nach demselben Verfahren wie oben für die Erfindungsbeispiele beschrieben hergestellt.

Beispiel 5 zeigt ein Doppelschichtband mit nichtmagnetischer Unterschicht, welches neben Ruß nur ein nadelförmiges unmagnetisches Unterschichtpigment vom im Beispiel 4 beschriebenen Typ enthält. Der HF-Pegel diese Bandes liegt etwas tiefer als bei den erfindungsgemäßen Beispielen. Die Beispiele 6 bis 9 enthalten in der unteren Schicht weichmagnetische Teilchen mit höherer Kristallitgröße. Das Doppelschichtband gemäß Beispiel 9 wurde für den HF-Pegel als Referenzband verwendet.

Die HF-Pegelwerte für diese Vergleichsbeispiele liegen um ca.1dB tiefer als bei den erfindungsgemäßen Beispielen.

Die Rauhigkeitswerte der Beispiele 6 bis 9 sind durchweg höher als die der erfindungsgemäßen Beispiele.

**Tabelle 2**

| Beispiel | Unterschicht-Pigment | | | Unterschicht | | | | Band | |
|---|---|---|---|---|---|---|---|---|---|
| Nr. | Typ | d (kr) | Fe-II | d | Hc | Φm | Mr/Mm | Ra | HF |
| | | nm | Gew.-% | µm | kA/m | nWb/m | | nm | dB |
| 5 | Fe2O3 | - | | | - | - | - | 4,6 | 0,7 |
| | | | | | | | | | |
| 6 | d | 12,0 | 3 | 1,3 | 2,7 | 142 | 0,14 | 6,2 | -0,4 |
| 7 | e | 14,5 | 2 | 1,4 | 0,8 | 150 | 0,11 | 5,7 | -0,2 |
| 8 | f | 15,0 | 2 | 1,4 | 1,1 | 128 | 0,11 | 6,0 | -0,1 |
| 9 | g | 11,5 | 7 | 1,4 | 3,5 | 124 | 0,17 | 5,6 | 0 |

## Patentansprüche

1. Mehrlagiges magnetisches Aufzeichnungsmedium, welches auf einem nichtmagnetischen Träger wenigstens eine obere bindemittelhaltige magnetische Aufzeichnungsschicht mit einer Dicke von kleiner als 0,5 µm, die ein feinteiliges Magnetpigment mit einer Koerzitivkraft H_{c} von 100 - 250 kA/m enthält, sowie wenigstens eine untere bindemittelhaltige Schicht, die ein isotropes weichmagnetisches Pigment, welches aus γ-Fe₂O₃, Fe₃O₄ oder einem Mischkristall aus diesen Komponenten ausgewählt ist, mit einer mittleren Kristallitgröße von kleiner als 10 nm enthält, aufweist.

2. Magnetisches Aufzeichnungsmedium gemäß Anspruch 1, wobei die Koerzitivkraft H_{c} des Pigmentes in der oberen Schicht 130 bis 220 kA/m beträgt.

3. Magnetisches Aufzeichnungsmedium gemäß Anspruch 1, wobei das Magnetpigment in der oberen Schicht ein Metallpigment oder Metalllegierungspigment ist.

4. Magnetisches Aufzeichnungsmedium gemäß Anspruch 1, wobei das Magnetpigment in der oberen Schicht ein hexagonales Ferritpigment oder ein Co-modifiziertes γ-Fe₂O₃, Co-modifiziertes Fe₃O₄, oder ein Mischkristall aus diesen Komponenten ist.

5. Magnetisches Aufzeichnungsmedium gemäß den Ansprüchen 1 bis 4, welches in der unteren Schicht ein isotropes weichmagnetisches Pigment mit einer mittleren Kristallitgröße von kleiner als 6 nm enthält.

6. Magnetisches Aufzeichnungsmedium gemäß den Ansprüchen 1 bis 5, wobei die untere Schicht eine Koerzitivkraft H_{c} von weniger als 0,7 kA/m aufweist.

7. Magnetisches Aufzeichnungsmedium gemäß den Ansprüchen 1 bis 6, wobei die untere Schicht eine Koerzitivkraft H_{c} von weniger als 0,3 kA/m aufweist.

8. Magnetisches Aufzeichnungsmedium gemäß den Ansprüchen 1 bis 7, wobei der Anteil des weichmagnetischen Pigmentes in der unteren Schicht 25 bis 85 Gew.%, bezogen auf das Gewicht der gesamten in der unteren Schicht eingesetzten Pigmente, beträgt.

9. Magnetisches Aufzeichnungsmedium gemäß den Ansprüchen 1 bis 8, wobei der Anteil des weichmagnetischen Pigmentes in der unteren Schicht 35 bis 78 Gew.%, bezogen auf das Gewicht der gesamten in der unteren Schicht eingesetzten Pigmente, beträgt.

10. Magnetisches Aufzeichnungsmedium gemäß den Ansprüchen 1 bis 9, wobei das weichmagnetische Pigment in der unteren Schicht mit einer Aluminiumverbindung oder einer Siliziumverbindung oder einem Gemisch aus beiden Verbindungen oberflächenbehandelt ist.

11. Magnetisches Aufzeichnungsmedium gemäß den Ansprüchen 1 bis 10, wobei das weichmagnetische Pigment in der unteren Schicht kugelförmig oder amorph ist.

12. Magnetisches Aufzeichnungsmedium gemäß den Ansprüchen 1 bis 11, wobei die untere Schicht neben dem weichmagnetischen Pigment wenigstens ein nichtmagnetisches Pigment enthält.

13. Magnetisches Aufzeichnungsmedium gemäß Anspruch 12, wobei das nichtmagnetische Pigment nadelförmig mit einer mittleren Längsachse von 5 bis 200 nm oder kugelförmig oder amorph mit einer mittleren Teilchengröße von 5 bis 180 nm ist.

14. Magnetisches Aufzeichnungsmedium gemäß den Ansprüchen 12 und 13, wobei das nichtmagnetische Pigment α-Fe₂O₃ ist.

15. Magnetisches Aufzeichnungsmedium gemäß den Ansprüchen 12 und 13, wobei das nichtmagnetische Pigment Ruß ist.

16. Magnetisches Aufzeichnungsmedium gemäß den Ansprüchen 12 und 13, wobei das nichtmagnetische Pigment ein Gemisch aus Ruß und α-Fe₂O₃ ist.

17. Verfahren zur Herstellung eines mehrlagigen magnetischen Aufzeichnungsmediums gemäß Anspruch 1, durch
- Mischen, Kneten und Dispergieren eines isotropen weichmagnetischen Pigmentes, welches aus γ-Fe₂O₃, Fe₃O₄ oder einem Mischkristall aus diesen Komponenten ausgewählt ist und eine mittlere Kristallitgröße von kleiner als 10 nm aufweist, mit einem Bindemittel, einem Lösungsmittel und weiteren Zusatzstoffen und Auftragen der Dispersion auf einen nichtmagnetischen Träger, wobei eine untere Schicht entsteht;
- Mischen, Kneten und Dispergieren eines feinteiligen Magnetpigmentes mit einer Koerzitivkraft H_{c} von 100 - 250 kA/m mit einem Bindemittel, einem Lösungsmittel und weiteren Zusatzstoffen und Auftragen der Dispersion auf die untere Schicht, wobei eine obere magnetische Aufzeichnungsschicht entsteht;
- Orientieren der feuchten Schichten in einem Magnetfeld;
- Trocknen der feuchten Schichten, bis eine Schichtdicke der oberen Schicht von kleiner als 0,5 µm erreicht ist, und
- nachfolgendes Kalandrieren und Trennen.

18. Verwendung eines weichmagnetischen Pigmentes, welches aus γ-Fe₂O₃, Fe₃O₄ oder einem Mischkristall aus diesen Komponenten ausgewählt ist und eine mittlere Kristallitgröße von kleiner als 10 nm aufweist, als Pigment in einer unteren Schicht eines magnetischen Aufzeichnungsmediums.

19. Verwendung eines weichmagnetischen Pigmentes, welches aus welches aus γ-Fe₂O₃, Fe₃O₄ oder einem Mischkristall aus diesen Komponenten ausgewählt ist und eine mittlere Kristallitgröße von kleiner als 6 nm aufweist, als Pigment in einer unteren Schicht eines magnetischen Aufzeichnungsmediums.

20. Verwendung eines magnetischen Aufzeichnungsmediums gemäß Anspruch 1 als Magnetband, Magnetkarte oder Floppy Disk.
